# EUROPEAN PATENT SPECIFICATION

(11) **EP 2 217 832 B1**
(45) Date of publication and mention of the grant of the patent: **09.10.2013**
(21) Application number: 07866752.4
(22) Date of filing: 06.11.2007
(51) Int. Cl.: F16H 7/12

(54) **ASYMMETRIC DAMPING TENSIONER FOR A BELT DRIVE**
SPANNVORRICHTUNG MIT ASYMMETRISCHER DAMPFUNG FUR EINEN RIEMENTRIEB
TENDEUR A AMORTISSEMENT ASYMETRIQUE POUR COURROIE D'ENTRAINEMENT

(43) Date of publication of application: 18.08.2010
(73) Proprietor: DAYCO EUROPE S.r.l., 66100 Chieti (IT)
(72) Inventor: LICATA, Federico, Domenico, I-10131 Torino (IT); PANE, Gianluca, I-10015 Ivrea (IT); FIORDALISO, Carlo, I-65013 Citta' Sant'Angelo (IT)
(74) Representative: Mola, Edoardo
(86) International application number: PCT/IT2007/000777
(87) International publication number: WO 2009/060479

(56) References cited:
- GB-A- 2 258 287
- US-A- 4 826 471

## Description

### TECHNICAL FIELD

The present invention relates to an asymmetric damping belt tensioner, preferably for a belt drive of an internal combustion engine.

### BACKGROUND ART

There are known tensioners in which the asymmetric damping is obtained by means of a sliding shoe hinged about a fixed axis and loaded against a cylindrical surface defined by an arm of the tensioner. As known, the friction torque exerted by the sliding shoe on the cylindrical surface varies according to the direction of rotation of the cylindrical surface itself with respect to the fixed axis and this allows to obtain an asymmetric damping action. US-A-4826471 discloses a tensioner according to the preamble of claim 1. It is desirable to improve the precision of the relative angular position of the sliding elements.

### DISCLOSURE OF INVENTION

It is the object of the present invention to make an asymmetric damping tensioner without the above-mentioned drawback.

The object of the present invention is reached by an asymmetric damping tensioner according to claim 1.

### BRIEF DESCRIPTION OF THE DRAWINGS

For a better understanding of the present invention, a preferred embodiment thereof will now be described only by way of non-limitative example and with reference to the accompanying drawings, in which:
- figure 1 is a frontal view of a tensioner according to the present invention;
   figure 2 is a section taken along line II-II in figure 1;
- figures 3 and 4 are enlarged perspective views of corresponding components of the tensioner in figure 1;
- figure 5 is a side view of figure 4;
- figure 6 is a side view with parts removed for clarity of a tensioner according to a further embodiment of the present invention; and
- figures 7 and 8 are perspective views of corresponding details of the tensioner in figure 6.

### BEST MODE FOR CARRYING OUT THE INVENTION

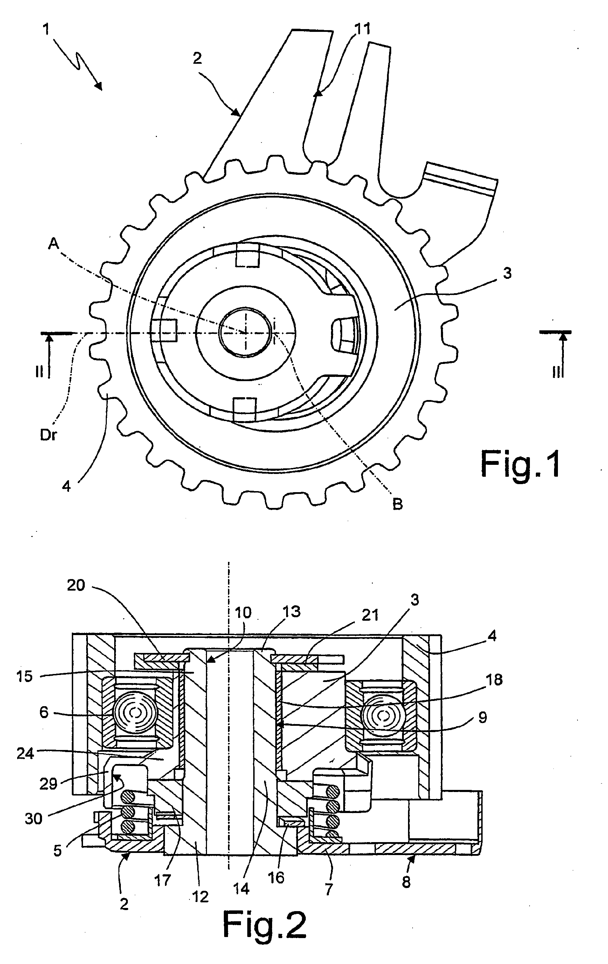

With reference to figure 1, numeral 1 indicates as a whole an asymmetric damping tensioner comprising a base 2 adapted to be fixed to a wall of an internal combustion engine (not shown), and a movable structure including a cam arm 3 hinged onto the base 2 about an axis A and having an axis B spaced from axis A, and an idle pulley 4 mounted on the cam arm 3.

Preferably, the idle pulley 4 defines the toothed surface which comes into contact with a belt of a timing gear drive (not shown) of the internal combustion engine.

Furthermore (figure 2), the tensioner 1 comprises a torsion spring 5 for loading the cam arm 3 and a bearing 6 for supporting the idle pulley 4 on the cam arm 3.

Specifically, the base 2 comprises a shaped metal sheet plate 7 defining a flat surface 8 perpendicular to axis A, and a pin 9 rigidly connected to the shaped plate 7 and defining axis A.

The pin 9 defines an axial through hole 10 for accommodating a fastening screw (not shown) adapted to secure the tensioner 1 to the wall of the internal combustion engine and the shaped plate 7 defines a groove 11.

The pin 9 further comprises an end portion 12 rigidly connected to the shaped plate 7 and an end portion 13 opposite to the end portion 12.

Between the end portions 12 and 13, the pin 9 integrally comprises a shaped portion 14 having an hexagonal section and a radial support portion 15 arranged between the shaped portion 14 and the end portion 13.

The tensioner 1 further comprises a wave spring 16 set on the end portion 12 and an insert 17 slidably mounted on the shaped portion 14 and loaded by the wave spring 16 to define an asymmetric damping device.

In particular, the wave spring 16 and the insert 17 are radially surrounded by the torsion spring 5. Preferably, the insert 17 is formed by PA4.6 filled with a polytetrafluoroethylene-based material, preferably in fibers, in order to obtain the best compromise between wear resistance and friction properties suited to the correct dynamic operation of the tensioner 1.

The cam arm 3 is mounted in contact with the insert 17 and is hinged onto the pin 9 by means of the polymeric material bushing 18.

Furthermore, the cam arm 3 is axially fixed onto the base 2 by means of a covering element 20 rigidly connected to the end portion 13, e.g. by caulking. In order to avoid the direct contact between the cam arm 3 and the covering element 20, the tensioner 1 comprises a polymeric material washer 21 arranged between the cam arm 3 and the covering element 20.

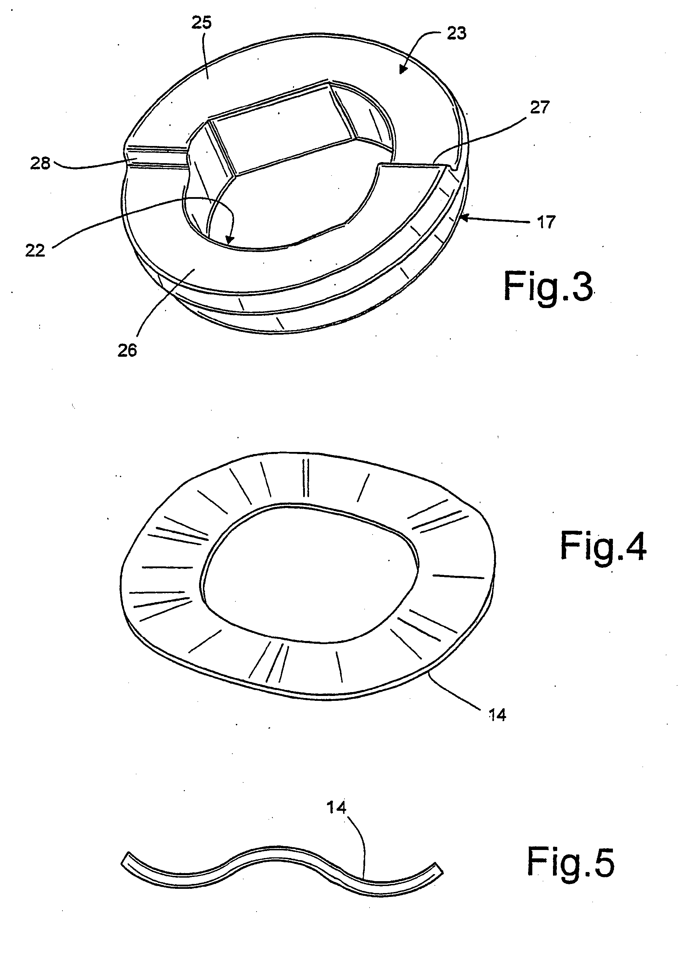

Figure 3 shows an enlarged view of the insert 17 which defines a through hole 22 having a section corresponding to that of the shaped portion 14 and defining a prismatic coupling that is rotationally rigid and slidable in a direction parallel to axis A.

Furthermore, the insert 17 defines a working surface 23 slanted with respect to axis A and cooperating in contact with a working surface defined by a shaped portion 24 made on the cam arm 3. For example, the working surface 23 is defined by means of two preferably helical axialsymmetric ramps 25 and 26, angularly delimited by two steps 27 and 28 angularly spaced by 180°.

According to a preferred embodiment, the shaped portion 24 defines a pair of ramps (not shown) having the same inclination with respect to that of the ramps 25, 26. Preferably, the cam arm 3 is made of die-cast aluminium and the shaped portion 24 may thus be made integrally with the arm itself.

Furthermore, the shaped portion 24 is surrounded by a cylindrical wall 29 which laterally delimits a hollow recess 30 in the cam arm 3 which radially accommodates the torsion spring 5.

The relative angular position of the shaped portion 24 with respect to the ramps 25, 26 is further controlled so as to guarantee that the torsion spring 5 applies the designed load on the belt.

For this purpose, the profile of the shaped portion 14 and the corresponding one of the insert 17 are not even but present a profile such as to allow the assembly only when the insert 17 is in a single predetermined angular position.

For example, the profile of the through hole 22 presents a profile defined by a pair of circumference arcs and by a first and second reciprocally different cord so that the predetermined angular position is unique.

Furthermore, the angular position of the sides of the shaped portion is referred with respect to a shouldering element defined by the base 2, and the ramps of the cam arm 3 equal to ramps 25, 26 present an angular position referred to the direction Dr crossing the axis A and B and laying on a plane perpendicular to the axis A and B themselves to allow a correct angular positioning of the ramps.

A correct angular positioning of the ramps of the cam arm 3 is obtained in a reliable manner by means of manufacturing by die-casting.

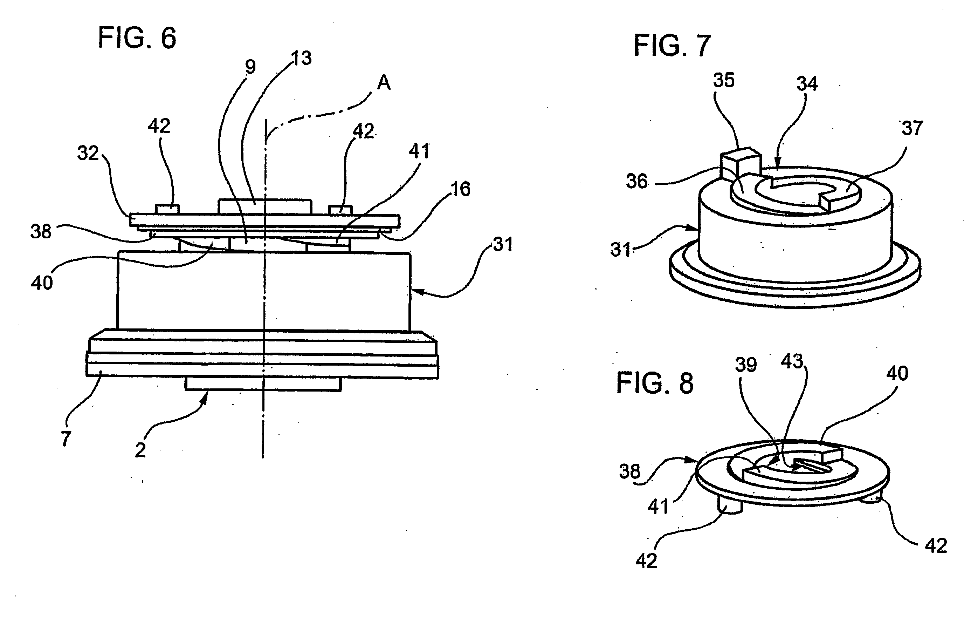

Figure 6 shows a tensioner 30 in which the elements functionally corresponding to those of the tensioner 1 are identified by the same reference numbers used in the previous paragraphs.

In particular, the tensioner 30 comprises the base 2, a movable structure including a cam arm 31 hinged onto the base 2 and the pulley 4 radially supported by the cam arm 31, and the torsion spring 5 for actuating the cam arm 31 and tensioning the belt.

The tensioner 30 further comprises a closing element 32 rigidly secured to the end portion 13 of the pin 9, e.g. by means of a caulking, to secure the cam arm 31 in an axial direction to the base 2.

Figure 7 shows the cam arm 31 which presents a through hole 33 for accommodating the pin 9 and a face 34 facing the closing element 32.

A protrusion 35 extending in parallel to axis A and a pair of ramps 36, 37 having corresponding helical profiles concentric to the hole 33 are defined on the face 34.

The ramps 36, 37 are the same as those of the shaped portion 24 of the tensioner 1 and are preferably made by die-casting on the cam arm 31 along with the protrusion 35.

The protrusion 35 slides in use inside a seat (not shown) defined by the covering element 32 and presenting a pair of stoppers for delimiting corresponding maximum angular positions of the cam arm 31.

Figure 8 shows a disc-like insert 38 defining a central opening 39 for accommodating a portion of the pin 9, a pair of ramps 40, 41 equal to ramps 36, 37 and a plurality of radially peripheral protrusions 42 exiting parallelly to axis A from the opposite side with respect to the ramps 40, 41.

The protrusions 42 are slidingly accommodated in corresponding seats defined by the closing element 32 to make a rotationally rigid and axially sliding constraint.

According to the embodiment shown in figures from 6 to 8, the wave spring 16 cooperates with the closing element 32 and is accommodated in a seat defined by the face of the insert 38 which carries the ridges 42 for loading the ramps 40, 41 onto the ramps 36, 37.

Furthermore, the central opening 39 defines a pair of preferably asymmetric rectilinear sides 42 adapted to couple with corresponding flattenings (not shown) of the pin 9.

The operation of the tensioners 1, 30 is the same and, for the sake of brevity, reference will be made below to tensioner 1 only.

After assembly and before mounting onto the internal combustion engine, the torsion spring 5 applies on the cam arm 3 a torque which maintains the latter in a position defined by an appropriate stopper defined by the arm 3 itself and by an axial protrusion (not shown) fixed with respect to the shaped plate 7. When the cam arm 3 is in a such position, the arm is unloaded and the torsion spring 5 is in the minimum load condition.

After the tensioner 1 has been mounted on the internal combustion engine, the cam arm 3 is taken by the belt of the timing drive to a nominal position defined when the drive is static.

Preferably, the nominal position is 45° with respect to the angular position of the unloaded arm.

In order to obtain an asymmetric damping, the ramps 25, 26 are oriented so that when the toothed belt tends to load the torsion spring 5 beginning from the nominal position, the cam arm 3 turns in a direction of rotation such that the insert 17 is spaced apart from the cam arm 3 and moves back towards the shaped plate 7 of the base 2 against the bias of the wave spring 16 in virtue of the action of the shaped portion 14.

By means of such orientation of the ramps 15, 16, the friction torque is proportional to the sine of the sum of the helix angle and of the friction angle, when the cam arm 3 turns so as to load the torsion spring 5.

Correspondingly, when the cam arm 3 turns in the direction so as to unload the torsion spring 5, the movement of the ramps 25, 26 allows the insert 17 to approach the shaped portion 24 to that the load applied to the wave spring 16 decreases.

Furthermore, when the cam arm 3 turns so as to unload the torsion spring 5, the friction torque is proportional to the sine of the difference between the friction angle and the helix angle. In particular, the helix angle and the friction angle are determined so that the sine of their difference is lower than the sine of the sum. This implies that the friction torque acting when the cam arm 3 turns in the direction so as to load the torsion spring 5 is greater than that acting when the cam arm 3 turns in the direction so as to unload the torsion spring 5.

By means of such friction torque variation, there is obtained an asymmetric damping which is greater when the cam arm 3 turns to load the torsion spring 5 and smaller when the cam arm 3 turns in the opposite direction.

The friction load torque is applied onto the cam arm 3 and the corresponding reaction torque is applied onto the insert 17 which tends to turn but is locked by the prismatic coupling with the shaped portion 14.

Furthermore, the wave spring 16 loads the insert 17 with an essentially linear force in the axial displacement range of the insert 17. In this manner, it is possible to achieve the condition according to which a high rotation of the cam arm corresponds to a high load torque generated by the load of the wave spring 16.

From an examination of the features of the tensioners 1, 30 made according to the present invention, the advantages that it allows to obtain are apparent.

An asymmetric damping device comprising the insert 17 provided with the ramps 25, 26 and elastically loaded is constructively easy and axially compact.

The compactness allows to apply such device to tensioners of different configuration from that having a cam arm and to concurrently require minimum geometric variations.

The ramps carried by the cam arm 3, 31 and those of the insert 17, 31 are equal in order to increase the extension of the surfaces in contact and to obtain the desired friction values with specific pressures and reduced wear.

The angularly fixed and axially slidable constraint requires that the translation guide of the insert 17, 31 to be reliable also in presence of friction load torque and this is ensured both by means of the prismatic coupling between the shaped portion 14 and the insert 17 and by means of the protrusions 42.

The wave spring 16 loads the insert 17 with an essentially linear force so as to obtain an asymmetric load torque proportional to the rotation of the cam arm 3, 31.

It is finally apparent that changes and variations can be made to the tensioner 1, 30 herein described and illustrated without departing from the scope of protection of the appended claims.

For example, the insert 17, 38 may be connected to the arm in a rotationally rigid and axially slidable manner.

Furthermore, the ramps carried by the cam arm 3, 31 may be made on an insert connected in a rotationally rigid manner on the arm itself.

Furthermore, the insert 17 and the spring 16 may also be mounted on tensioners for accessory drives having a different arm from a cam arm, such as for example the tensioners which comprise an elongated arm and an idle pulley projectingly carried on an end portion of the elongated arm.

It is also possible to mount the tensioners 1, 30 on belt drives in which the belt is exposed to vapours and/or sprays of lubricant oil, and/or is at least partially immersed in oil at rest, and/or in which the oil is brought onto the belt, e.g. sprayed by means of a specific nozzle or by splashing due to the action of the belt and of the pulleys.

In such cases, the bearing 6 is optional and may be replaced by a hydrodynamic system in which the pulley is journaled on the cam arm.

Advantageously, in the case of the above-mentioned oil applications, the tensioner may comprise a sliding shoe which replaces the pulley and comes into contact with the drive belt. The sliding shoe may be carried on or define a single body with the tensioner arm.

Alternatively, the insert 17 may be loaded against the shaped portion 24 also by means of a washer spring to obtain an essentially constant load independently from the angular position of the cam arm or also by means of a inelastic load.

## Claims

1. An asymmetric damping tensioner (1; 30) for a belt drive, comprising a base (2) defining a rotation axis (A), a movable structure (3, 4; 31, 4) defining a contact surface (4) adapted to cooperate with a belt of said drive and having a portion (3; 31) hinged to said rotation axis (A), first elastic means (5) acting on said movable structure (3, 4; 31, 4) to press said contact element (4) onto said belt, first sliding means (17; 38) rotationally fixed with respect to said base (2), second sliding means (24; 36, 37) rotationally fixed with respect to said portion (3; 31) of said movable structure (3, 4; 31, 4) and cooperating in contact with said first sliding means (17;38), and loading means (16) for loading said first sliding means (17; 38) against said second sliding means (24; 36, 37), said first and second sliding means (17, 38, 24, 36, 37) cooperating by means of at least one ramp (25, 26; 40, 41) inclined with respect to said rotation axis (A) so that said first and second sliding means (17, 38, 24, 36, 37) tend to move apart when said movable structure (3, 4; 31, 4) turns in a direction such as to load said first elastic means (5) and leads said first sliding means (17; 38), and tend to move closer when said movable structure (3, 4; 31, 4) turns in a second direction opposite to said first direction,
**characterized in that** said second sliding means (24, 36, 37) define one sole piece with said portion (3; 31) of said movable structure (3, 4; 31, 4) and **in that** said first sliding means (17) are coupled to a pin (9) defining said rotation axis (A) by means of a prismatic coupling so that a predetermined angular position of said first sliding means (17) is unique, such as to allow the assembly only when the first sliding means is in a single predetermined angular position, and wherein said loading means comprise a wave spring (16).

2. A tensioner according to claim 1, **characterized in that** at least one of said first and second sliding means (17; 38) comprises an insert linearly movable in a direction parallel to said rotation axis (A).

3. A tensioner according to one of claims 1 or 2, **characterized in that** said at least one ramp (25, 26; 40, 41) is carried by one of said first and second sliding means (17, 38, 24, 36, 37) and **in that** the other of said first and second sliding means (17, 38, 24, 36, 37) comprises a protrusion (24; 36, 37) cooperating with said ramp (25, 26; 40, 41).

4. A tensioner according to claim 3, **characterized in that** said protrusion comprises a second ramp (24; 36, 37).

5. A tensioner according to claim 4, **characterized in that** said second ramp (24; 36, 37) defines a first helical profile coaxial to said rotation axis (A).

6. A tensioner according to any preceding claim, **characterized in that** said at least one ramp (25, 26; 40, 41) defines a second helical profile coaxial to said rotation axis (A).

7. A tensioner according to claims 5 and 6, **characterized in that** said first and second helical profiles present equal winding angles.

8. A tensioner according to any preceding claim, **characterized in that** said first and second sliding means (17, 38, 24, 36, 37) are axialsymmetric.

9. A tensioner according to any preceding claim, **characterized in that** one of said first and second sliding means (17, 38, 24, 36, 37) is formed by a polyamide matrix filled with polytetrafluoroethylene.

10. A tensioner according to any of the preceding claims, **characterized in that** said first sliding means (18) are surrounded by said elastic means (5).

11. A tensioner according to any claim from 1 to 11, **characterized in that** one of said first and second sliding means (17) comprises a plurality of protrusions (42) parallel to said rotation axis (A) and **in that** the corresponding of said base (2) and movable structure (3, 4; 31, 4) defines a plurality of seats for slidingly accommodating said plurality of protrusions (42).

12. A tensioner according to any preceding claim, **characterized in that** said movable structure (3, 4; 31, 4) comprises a pulley defining said contact surface.

13. A tensioner according to any claim from 1 to 11, **characterized in that** said movable structure (3, 4; 31, 4) comprises a sliding shoe defining said contact surface.

## Patentansprüche

1. Asymmetrische Dämpfungs-Spannvorrichtung (1; 30) für einen Riemenantrieb umfassend eine Basis (2), die eine Drehachse (A) definiert, eine bewegbare Struktur (3,4; 31,4), die eine Kontaktfläche (4) definiert, die ausgelegt ist, um mit einem Riemen des Antriebs zusammen zu wirken und einen Abschnitt (3; 31) umfasst, der drehbar an der Drehachse (A) angebracht ist, ein erstes elastisches Mittel (5), das auf die bewegbare Struktur (3,4; 31, 4) wirkt, um das Kontaktelement (4) auf den Riemen zu drücken, ein erstes Gleitmittel (17; 38), das bezüglich der Basis (2) drehend fixiert ist, ein zweites Gleitmittel (24; 36, 37), das bezüglich des Abschnitts (3; 31) der bewegbaren Struktur (3, 4; 31, 4) drehend betestigt ist und in Kontakt mit dem ersten Gleitmittel (11; 38) zusammen wirkt, und ein Belastungsmittel (16) zum Beaufschlagen des ersten Gleitmittels (17; 38) gegen das zweite Gleitmittel (24; 36, 37), wobei das erste und das zweite Gleitmittel (17, 38, 24, 36, 37) mittels wenigstens einer Rampe (25, 26; 40, 41) zusammenwirken, die bezüglich der Drehachse (A) geneigt ist, so dass das erste und das zweite Gleitmittel (17, 3 8, 24, 36, 37) darauf gerichtet sind, sich auseinander zu bewegen, wenn die bewegbare Struktur (3, 4 31, 4) in eine Richtung dreht, um so das erste elastische Mittel (5) zu beaufschlagen und das erste Gleitmittel (17; 38) führt, und darauf gerichtet sind, sich näher zueinander zu bewegen, wenn sich die bewegbare Struktur (3, 4; 31,4) in eine zweite Richtung entgegengesetzt zur ersten Richtung dreht,
**dadurch gekennzeichnet, dass** das zweite Gleitmittel (24, 36, 37) mit dem Abschnitt (3; 31) der bewegbaren Struktur (3, 4; 31, 4) ein einziges Teil definiert und dadurch, dass das erste Gleitmittel (17) mit einem Stift (9) gekoppelt ist, der die Drehachse (A) über eine prismatische Kopplung definiert, so dass eine vorher festgelegte Winkelposition des ersten Gleitmittels (17) einzig ist, so dass sie den Zusammenbau nur ermöglicht, wenn das erste Gleitmittel sich in einer einzigen vorher festgelegten Winkelposition befindet, und wobei das Belastungsmittel eine Wellfeder umfasst.

2. Spannvorrichtung gemäß Anspruch 1, **dadurch gekennzeichnet, dass** wenigstens eines von dem ersten und dem zweiten Gleitmittel (17; 3 8) einen Einsatz umfasst, der linear in eine Richtung parallel zu der Drehachse (A) bewegbar ist.

3. Spannvorrichtung gemäß einem der Ansprüche 1 oder 2, **dadurch gekennzeichnet, dass** die wenigstens eine Rampe (25, 26; 40, 41) über eines von ersten und dem zweiten Gleitmittel (17, 38, 24, 36, 37) getragen ist und dadurch, dass das andere von dem ersten und dem zweiten Gleitmittel (17, 38, 24, 36, 37) einen Vorsprung (24; 36, 37) umfasst, der mit der Rampe (25, 26; 40, 41) zusammen wirkt.

4. Spannvorrichtung gemäß Anspruch 3, **dadurch gekennzeichnet, dass** der Vorsprung eine zweite Rampe (24; 36, 37) umfasst.

5. Spannvorrichtung gemäß Anspruch 4, **dadurch gekennzeichnet, dass** die zweite Rampe (24; 36, 37) ein erstes schraubenförmiges Profil koaxial zu der Drehachse (A) definiert.

6. Spannvorrichtung gemäß einem der vorstehenden Ansprüche, **dadurch gekennzeichnet, dass** die wenigstens eine Rampe (25, 26; 40,41) ein zweites schraubenförmiges Profil koaxial zu der Drehachse (A) definiert.

7. Spannvorrichtung gemäß Anspruch 5 und 6, **dadurch gekennzeichnet, dass** die ersten und zweiten schraubenförmigen Profile gleiche Windungswinkel aufweisen.

8. Spannvorrichtung gemäß einem der vorstehenden Ansprüche, **dadurch gekennzeichnet, dass** die ersten und zweiten Gleitmittel (17, 38, 24, 36, 37) axialsymmetrisch ausgebildet sind.

9. Spannvorrichtung gemäß einem der vorstehenden Ansprüche, **dadurch gekennzeichnet, dass** die ersten und die zweiten Gleitmittel (17, 38, 24, 36, 37) über eine Polyamidmatrix gebildet sind, die mit Polytetrafluoräthylen gefällt ist.

10. Spannvorrichtung gemäß einem der vorstehenden Ansprüche, **dadurch gekennzeichnet, dass** das erste Gleitmittel (18) von dem elastischen Mittel (5) umgeben ist.

11. Spannvorrichtung gemäß einem der Ansprüche 1 bis 10, **dadurch gekennzeichnet, dass** eines von dem ersten und dem zweiten Gleitmittel (17) mehrere Vorsprünge (42) parallel zu der Drehachse (A) umfasst und dadurch, dass die zu der Basis (2) und bewegbare Struktur (3, 4; 31, 4) korrespondierende mehrere Aufnahmen für ein gleitendes Aufnehmen der mehrere Vorsprünge (42) definiert.

12. Spannvorrichtung gemäß einem der vorstehenden Ansprüche, **dadurch gekennzeichnet, dass** die bewegbare Struktur (3, 4; 31, 4) eine Scheibe umfasst, die die Kontaktfläche definiert.

13. Spannvorrichtung gemäß einem der Ansprüche 1 bis 11, **dadurch gekennzeichnet, dass** die bewegbare Struktur (3, 4; 31, 4) einen Gleitschuh umfasst, der die Kontaktfläche definiert.

## Revendications

1. Tendeur à amortissement asymétrique (1 ; 30) destiné à un entraînement à courroie, comprenant une base (2) définissant un axe de rotation (A), une structure mobile (3, 4 ; 31, 4) définissant une surface de contact (4) conçue pour coopérer avec une courroie dudit entraînement et comportant une partie (3 ; 31) articulée sur ledit axe de rotation (A), un premier moyen élastique (5) agissant sur ladite structure mobile (3, 4 ; 31, 4) pour comprimer ledit élément de contact (4) sur ladite courroie, un premier moyen de coulissement (17 ; 38) fixe sur le plan rotationnel par rapport à ladite base (2), un deuxième moyen de coulissement (24 ; 36, 37) fixe sur le plan rotationnel par rapport à ladite partie (3 ; 31) de ladite structure mobile (3, 4 ; 31, 4) et coopérant par contact avec ledit premier moyen de coulissement (17 ; 38), et un moyen de chargement (16) destiné à charger ledit premier moyen de coulissement (17 ; 38) contre ledit deuxième moyen de coulissement (24 ; 36, 37), lesdits premier et deuxième moyens de coulissement (17, 38, 24, 36, 37) coopérant au moyen d'au moins une rampe (25, 26 ; 40, 41) inclinée par rapport audit axe de rotation (A) de sorte que lesdits premier et deuxième moyens de coulissement (17, 38, 24, 36, 37) tendent à s'écarter lorsque ladite structure mobile (3, 4 ; 31, 4) tourne dans le sens du chargement dudit premier moyen élastique (5) et entraîne ledit premier moyen de coulissement (17 ; 38), et tendent à se rapprocher lorsque ladite structure mobile (3, 4 ; 31, 4) tourne dans un sens opposé audit premier sens,
**caractérisé en ce que** ledit deuxième moyen de coulissement (24, 36, 37) est une pièce solidaire de ladite partie (3 ; 31) de ladite structure mobile (3, 4 ; 31, 4) et **en ce que** ledit premier moyen de coulissement (17) est couplé à une broche (9) définissant ledit axe de rotation (A) au moyen d'un accouplement prismatique de sorte qu'une position angulaire prédéterminée dudit premier moyen de coulissement (17) est unique, par exemple pour permettre l'assemblage uniquement lorsque le premier moyen de coulissement se trouve dans une position angulaire prédéterminée unique, et où ledit moyen de chargement comprend un ressort ondulé (16).

2. Tendeur selon la revendication 1, **caractérisé en ce que** au moins un moyen parmi lesdits premier et deuxième moyens de coulissement (17 ; 38) comprend un élément d'insertion linéairement mobile dans une direction parallèle audit axe de rotation (A).

3. Tendeur selon l'une des revendications 1 et 2, **caractérisé en ce que** ladite au moins une rampe (25, 26 ; 40, 41) est portée par un premier moyen parmi lesdits premier et deuxième moyens de coulissement (17, 38, 24, 36, 37) et **en ce que** l'autre moyen parmi lesdits premier et deuxième moyens de coulissement (17, 38, 24, 36, 37) comprend une protubérance (24 ; 36, 37) coopérant avec ladite rampe (25, 26 ; 40, 41).

4. Tendeur selon la revendication 3, **caractérisé en ce que** ladite protubérance comprend une deuxième rampe (24 ; 36, 37).

5. Tendeur selon la revendication 4, **caractérisé en ce que** ladite deuxième rampe (24 ; 36, 37) définit un premier profil hélicoïdal coaxial audit axe de rotation (A).

6. Tendeur selon l'une quelconque des revendications précédentes, **caractérisé en ce que** ladite au moins une rampe (25, 26 ; 40, 41) définit un deuxième profil hélicoïdal coaxial audit axe de rotation (A).

7. Tendeur selon les revendications 5 et 6, **caractérisé en ce que** lesdits premier et deuxième profils hélicoïdaux présentent des angles d'enroulement identiques.

8. Tendeur selon l'une quelconque des revendications précédentes, **caractérisé en ce que** lesdits premier et deuxième moyens de coulissement (17, 38, 24, 36, 37) sont axialement symétriques.

9. Tendeur selon l'une quelconque des revendications précédentes, **caractérisé en ce que** l'un desdits premier et deuxième moyens de coulissement (17, 38, 24, 36, 37) est formé par une matrice polyamide remplie de polytétrafluoroéthylène.

10. Tendeur selon l'une quelconque des revendications précédentes, **caractérisé en ce que** ledit premier moyen de coulissement (18) est entouré dudit moyen élastique (5).

11. Tendeur selon l'une quelconque des revendications 1 à 10, **caractérisé en ce que** l'un desdits premier et deuxième moyens de coulissement (17) comprend une pluralité de protubérances (42) parallèles audit axe de rotation (A) et **en ce que** l'élément correspondant desdites base (2) et structure mobile (3, 4 ; 31, 4) définit une pluralité de sièges destinés à recevoir de manière coulissante ladite pluralité de protubérances (42).

12. Tendeur selon l'une quelconque des revendications précédentes, **caractérisé en ce que** ladite structure mobile (3, 4 ; 31, 4) comprend une poulie définissant ladite surface de contact.

13. Tendeur selon l'une quelconque des revendications 1 à 11, **caractérisé en ce que** ladite structure mobile (3, 4 ; 31, 4) comprend un sabot de coulissement définissant ladite surface de contact.
